Europäisches Patentamt

European Patent Office

Office européen des brevets

(19)

(11) Veröffentlichungsnummer: **0 402 363 B1**

(12)

# EUROPÄISCHE PATENTSCHRIFT

(45) Veröffentlichungstag der Patentschrift:
**11.12.91 Patentblatt 91/50**

(51) Int. Cl.⁵ : **B60C 23/04, G01L 17/00**

(21) Anmeldenummer: **89901262.9**

(22) Anmeldetag : **18.01.89**

(86) Internationale Anmeldenummer:
**PCT/DE89/00021**

(87) Internationale Veröffentlichungsnummer:
**WO 89/10274 02.11.89 Gazette 89/26**

(54) **REIFENDRUCKSENSOR FÜR KRAFTFAHRZEUGE.**

(30) Priorität : **23.04.88 DE 3813846**

(43) Veröffentlichungstag der Anmeldung :
**19.12.90 Patentblatt 90/51**

(45) Bekanntmachung des Hinweises auf die
Patenterteilung :
**11.12.91 Patentblatt 91/50**

(84) Benannte Vertragsstaaten :
**DE FR IT SE**

(56) Entgegenhaltungen :
**EP-A- 0 157 205**
**DE-A- 2 832 447**
**DE-A- 3 018 246**
**DE-A- 3 543 866**

(73) Patentinhaber : **ROBERT BOSCH GmbH**
**Postfach 10 60 50**
**W-7000 Stuttgart 10 (DE)**

(72) Erfinder : **BURKARD, Johannes**
**Pillenreuther Strasse 86**
**W-8500 Nürnberg 40 (DE)**
Erfinder : **WELTIN, Wolfgang**
**Beslerstrasse 16**
**W-8500 Nürnberg 60 (DE)**

EP 0 402 363 B1

## Beschreibung

Die Erfindung richtet sich auf einen Reifendrucksensor für Kraftfahrzeuge nach dem Oberbegriff des Patentanspruches 1, siehe DE-A-2626475.

Für höhere Fahrzeuggeschwindigkeit schreiben Reifenund Fahrzeughersteller erhöhte Reifendrucke vor. Dies kann dadurch berücksichtigt werden, daß die Schaltschwelle durch Einstellung des Drucks in der Referenzdruckkammer auf den größten erforderlichen Druck eingestellt wird. Dies führt zu einem Komfortverlust bei niedrigen Geschwindigkeiten (vgl. DE-A-32 43 845). Wird demgegenüber der Reifendrucksensor auf den im unteren Geschwindigkeitsbereich bei Vollast vorgeschriebenen Reifendruck eingestellt, wird bei hohen Geschwindigkeiten der erforderliche höhere Reifendruck nicht überwacht und durch die Reifendruck-Überwachungseinrichtung eine tatsächlich nicht gewährleistete Sicherheit vorgetäuscht, was aber gerade in diesem Drehzahlbereich gefährlich ist.

Aus der DE-A-26 26 475 ist es bekannt, die Membran der Referenzdruckkammer eines Reifendrucksensors mit einem massiven Kolben zu versehen, an dessen Stirnseite der Schlauch des zu überwachenden Reifens anliegt, welcher bei ausreichendem Luftdruck im Reifen die Membran gegen den Druck in der Referenzdruckkammer so weit eindrückt, daß in der Referenzdruckkammer ein elektrischer Kontakt geschlossen wird. Dort ist ferner erwähnt, daß Zentrifugalkräfte am Kolben der Membran die vom Reifendruck auf die Membran ausgeübte Kraft bei steigender Geschwindigkeit vorteilhaft verringern, so daß bei höheren Geschwindigkeiten der Reifendruck erhöht werden muß, um den Schaltkontakt geschlossen zu halten. Dabei ist jedoch nachteilig, daß der als Zusatzmasse für die Membran verwendete Kolben vom Schlauch des Reifens abgedeckt ist, so daß die an ihm wirksamen Fliehkräfte nur zum Teil und undefiniert an der Referenzdruckkammer zur Anhebung der Schaltschwelle wirksam werden. Mit dieser Lösung ist es daher nicht möglich, die Anhebung der Schaltschwelle um ein definiertes und reproduzierbares Maß bei einer bestimmten Geschwindigkeit gegenüber dem Stillstand zu realisieren, da die geschwindigkeitsabhängige Anhebung der Schaltschwelle bei dieser Ausführungsform nicht vorher bestimmbar ist.

Hiervon ausgehend liegt der Erfindung die Aufgabe zugrunde, einen Reifendrucksensor mit geschwindigkeitsabhängiger Schwellwertverschiebung derart auszugestalten, daß eine erhöhte, reproduzierbare Schaltempfindlichkeit und eine verbesserte Temperaturankopplung der Referenzdruckkammer an die Temperatur im Reifen gegeben ist.

Diese Aufgabe wird erfindungsgemäß durch die kennzeichnenden Merkmale des Patentanspruches 1 gelöst. Aufgrund der zwischengeschalteten Ringmembran kann sich der Massering, in der Regel ein Metallring, in Abhängigkeit von der auf ihn wirkenden Fliehkraft und dementsprechend in Abhängigkeit von der gefahrenen Geschwindigkeit radial nach außen verlagern. Hierdurch wird der Gleichgewichtszustand der auf die Kontaktmembran in entgegengesetzter Richtung wirkenden Kräfte hin zu höheren Reifendrucken verlagert, so daß eine Verlagerung des Schaltschwellwerts des Druckschalters hin zu höheren Drücken erfolgt. Hierdurch wird erreicht, daß der Druckschalter gerade bei hohen Geschwindigkeiten, wo dies besonders wichtig ist, auf einen Abfall des Reifendrucks frühzeitig anspricht.

Da die Referenzdruckkammer aufgrund dieser Konstruktion praktisch ganz in den vom schlauchlosen Reifen umschlossenen Raum ragt und damit von der Reifenluft umspült wird, wird eine sehr gute Temperaturkompensation zwischen der Temperatur der Luft im Reifeninneren und dem Gas in der Referenzdruckkammer erreicht, wodurch das ohnehin konstruktionsbedingt besonders feinfühlige Schaltverhalten noch verbessert wird.

Vorteilhafterweise ist vorgesehen, daß der Massering mit der Ringmembran und der Kontaktmembran verschweißt ist. Hierdurch wird eine haltbare Verbindung und eine hermetische Abdichtung der Referenzdruckkammer erreicht.

Die radiale Breite bzw. die Dicke bzw. das Material der Ringmembran sowie die Masse des Masserings werden so ausgewählt, daß eine gewünschte drehzahlabhängige Schaltschwellenverschiebung erreicht wird. Die Schaltschwellenverschiebung läßt sich also durch verschiedene, teilweise voneinander völlig unabhängige Parameter vorgeben, so daß es möglich ist, je nach dem konkreten Anwendungsfall und den jeweiligen Herstellervorgaben definierte Kennlinien der Schaltschwellenverschiebung in Abhängigkeit von der Drehzahl zu erzeugen. Hierbei kann insbesondere auch die Federcharakteristik der als Tellerfeder wirkenden Ringmembran nach den bekannten Berechnungen gezielt herangezogen werden. Ebenso kann dabei die drehzahlabhängige Aufwölbung der Kontaktmembran mit erfaßt werden, die durch ihre Geometrie und ihr Material zu beeinflussen ist.

Weitere Merkmale, Vorteile und Einzelheiten der Erfindung ergeben sich aus der folgenden Beschreibung eines bevorzugten Ausführungsbeispiels anhand der Zeichnung. Dabei zeigen

Fig. 1 einen Schnitt durch einen Reifen und den radial außenliegenden Teil der zugehörigen Felge mit einer schematischen Seitenansicht eines in diese eingesetzten Drucksensors,

Fig. 2 einen schematischen Schnitt durch den Referenzdruckkammerbereich eines erfindungsgemäßen Drucksensors bei stillstehendem Rad und

Fig. 3 eine Fig. 2 entsprechende Darstellung bei mit höherer Geschwindigkeit drehendem Rad.

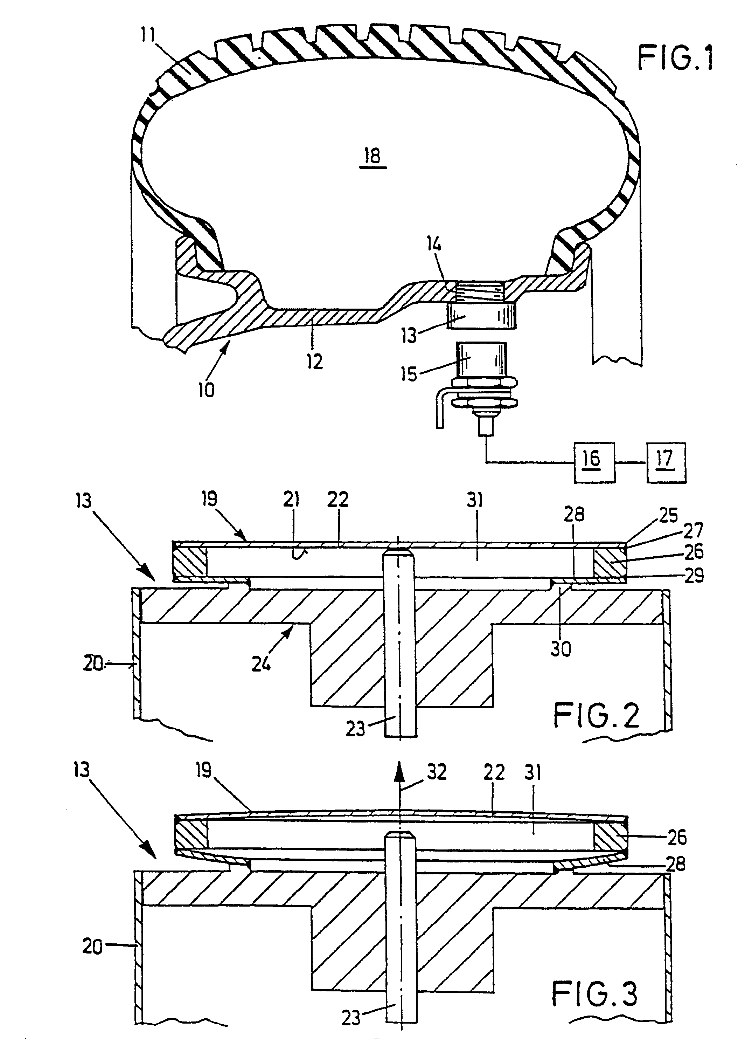

In Fig. 1 ist ein Ausschnitt eines Kraftfahrzeugrades in verkleinertem Maßstab dargestellt und mit 1o bezeichnet. Er zeigt einen Reifen 11, der auf einer Radfelge 12 befestigt ist. An einem nach innen gerichteten Abschnitt der Radfelge 12 ist ein Reifendrucksensor 13 radial zur Radachse in einer Gewindebohrung 14 der Radfelge 12 befestigt. In geringem Abstand dazu ist im Bereich des Reifendrucksensors 13 an der nicht dargestellten Radaufhängung des Fahrzeugs ein Signalaufnehmer 15 befestigt, dessen Stirnseite zum Reifendrucksensor 13 hin gerichtet ist und eine hochfrequente Schwingung in den Reifendrucksensor 13 einkoppelt, wenn dieser bei jeder Umdrehung des Fahrzeugrades 1o vorbeiläuft. Der Aufnehmer 15 ist gemeinsam mit den Aufnehmern der übrigen Fahrzeugräder an eine Auswerteschaltung 16 mit einer daran angeschlossenen Warnanzeige 17 verbunden, die bei zu geringem Luftdruck in einem der Reifen ein Warnsignal abgibt. Ein derartiger Drucksensor ist z.B. in der DE-OS 35 23 774 näher beschrieben.

In den Fig. 2 und 3 ist der dem Reifeninneren 18 zugewandte Teil des Drucksensors 13, insbesondere die Referenzdrückkammer 19 näher dargestellt. Dabei ist im einzelnen nicht dargestellt, wie das Gehäuse 2o des Drucksensors 13 ausgebildet und in der Felge 12 festgelegt ist.

Die Referenzdruckkammer 19 umfaßt eine wenigstens an ihrer Innenseite 21 metallisierte Membran 22, welche mit einem als Schaltkontakt 23 wirkenden Metallstift, welcher in einer oberen Abdeckung 24 des Gehäuses 20 isoliert befestigt ist, als Druckschalter zusammenwirkt.

Der Außenrand 25 der Membran 22 ist mit einem Massering 26 aus Metall bei 27 verschweißt.

An seiner Unterseite ist der Massering 26 mit einer o,3 mm dicken Ringmembran 28 aus Edelstahl bei 29 verschweißt, wobei die Ringmembran 28 mit der Abdeckung 24 längs eines ringförmig umlaufenden Vorsprungs 3o dicht verbunden ist, so daß ein in dem so gebildeten Innenraum 31 der Referenzdruckkammer 19 eingestellter Referenzgasdruck aufrechterhalten bleibt.

Die Kontaktmembran 22 besteht beispielsweise aus einer o,2 mm dicken Edelstahlschicht und ist mittels eines Laserstrahls mit dem Massering 26 verschweißt. Der Kontaktstift 23 kann an seinem Vorderende eine in der Zeichnung im einzelnen nicht dargestellte Kontaktkugel aus Gold tragen. In den Innenraum 31 der Referenzdruckkammer 19 wird in an sich bekannter Weise über einen nicht dargestellten Einfüllkanal Luft oder Stickstoff mit dem erforderlichen Referenzdruck eingefüllt. Nach dem Befüllen der Referenzdruckkammer 19 wird der Einfüllkanal druckdicht verschlossen. Dieser Endzustand ist in Fig. 2 und 3 dargestellt.

Bei dem in Fig. 2 dargestellten Ruhezustand funktioniert der durch die Membran 22 und den Kontaktstift 23 gebildete Druckschalter in herkömmlicher Weise so, daß bei einem Abfall des Drucks im Reifeninnenraum 18 die Membran 22 aufgrund des Gasdrucks im Innenraum 31 der Referenzdruckkammer (in Fig. 2 nach oben) abgehoben wird, so daß die leitende Verbindung zwischen der metallisierten Innenseite 21 der Membran 22 und dem Kontaktstift 23 unterbrochen und dementsprechend ein Druckabfall-Signal detektiert werden kann. Bei ausreichendem Reifendruck liegt die Membran 22 gemäß Fig. 2 am Kontaktstift 23 an.

In Fig. 3 ist das Verhalten des Druckschalters dargestellt, wenn das Rad 1o sich mit relativ hoher Geschwindigkeit bei im Vergleich zu Fig. 2 gleichhohem Reifendruck dreht. Aufgrund der durch den Pfeil 32 dargestellten Fliehkraft wird der Massering 26 ebenso wie die Kontaktmembran 22 und die Ringmembran 28 nach außen gezogen, so daß die Membran 22 vom Kontaktstift 23 abhebt. Zur Einstellung des in Fig. 2 dargestellten Gleichgewichtszustandes muß nun ein höherer Reifendruck vorgesehen werden, welcher auf die Kontaktmembran 22 in einer dem Pfeil 32 entgegengesetzten Richtung einwirkt, so daß auf diese Weise eine Verlagerung der Schaltschwelle hin zu höheren Drücken erreicht wird. Bei einem Membrandurchmesser von 2o mm beträgt die gesamte Aufwölbung der Membranen 22 und 28 bei hohen Fahrgeschwindigkeiten nur etwa 5o μm, was einer Schaltschwellenanhebung von etwa o,5 bar entspricht. Dabei wird im Beispielsfall gemäß Fig. 3 die Ringmembran 28 durch den Massering 26 in etwa doppelt so stark angehoben wie die Kontaktmembran 22 durch ihre Eigenmasse. Im diesem Fall ist folglich die Aufwölbung der Kontaktmembran 22 bei der Schaltschwellenanhebung mit zu berücksichtigen. Wird dagegen die drehzahlabhängige Schaltschwellenanhebung maßgebend durch eine entsprechende Dimensionierung der Ringmembran 28 und des Masserings 26 bewirkt, so kann die Aufwölbung einer massearmen Kontaktmembran 22 gegebenenfalls vernachlässigt werden.

**Patentansprüche**

1. Reifendrucksensor für Kraftfahrzeuge mit einem am Umfang einer Radfelge eines Fahrzeugrades sich in radialer Richtung zur Reifenlauffläche hin erstreckenden Druckschalter mit einer Referenzdruckkammer, welche zur Reifeninnenseite hin durch eine elektrisch leitende, zur Lauffläche des Reifens parallel angeordnete Kontaktmembran abgeschlossen ist, die mit einem gehäusefesten Schaltkontakt in Abhängigkeit von dem relativen Reifendruck zusammenwirkt und die zur geschwindigkeitsabhängigen Anhebung der Schaltschwelle des Druckschalters von einer unter dem Einfluß der Zentrifugalkraft radial beweglichen Masse drehzahlabhängig angehoben wird, **dadurch gekennzeichnet, daß** die Referenzdruckkammer (19) zur Felgenseite hin durch eine an ihrem Innenrand mit dem Gehäuse des Druckschalters und an ihrem Außenrand (29) über einen Massering (26) mit der Kontaktmembran (22) verbundene Ringmembran (28) abgeschlossen ist.

## Claims

1. Tyre pressure sensor for motor vehicles, with a pressure switch at the circumference of a wheel rim of a vehicle wheel and extending in a radial direction with respect to the tyre tread and having a reference pressure chamber which is closed, towards the inside of the tyre, by an electrically conducting contact membrane arranged parallel to the tread of the tyre, which interacts with a switching contact rigidly connected to the casing in dependence on the relative tyre pressure, and which, dependent on the engine speed, can be raised by a mass moving radially under the influence of centrifugal force in order to raise the switching threshold of the pressure switch in a speed-dependent manner, characterised in that the reference pressure chamber (19) is closed, towards the inside of the rim, by an annular membrane (28) connected at its inner edge to the casing of the pressure switch and connected at its outer edge (29) via a mass ring (26) to the contact membrane (22).

## Revendications

1. Détecteur de pression de pneumatiques d'un véhicule automobile, avec un commutateur de pression s'étendant sur le pourtour d'une jante de roue de véhicule automobile en direction radiale vers la surface de roulement du pneumatique, avec une chambre de pression de référence, laquelle est délimitée par une membrane de contact électriquement conductrice, disposée parallèlement à la surface de roulement du pneumatique, membrane qui coopère avec un contact de commutation solidaire du boîtier en fonction de la pression relative du pneumatique et qui est soulevée en fonction de la vitesse de rotation pour le relèvement en fonction de la vitesse du seuil de commutation du commutateur de pression par une masse mobile radialement sous l'influence de la force centrifuge, détecteur de pression caractérisé en ce que la chambre de pression de référence (19) est fermée sur le côté de la jante par une membrane reliée sur son bord intérieur au boîtier du commutateur de pression et sur son bord extérieur (29) à la membrane de contact (22) par l'intermédiaire d'une bague massive (26).

FIG.1

11

18

14

13

15

12

10

16    17

FIG.2

13    19    21    22    31    28    25
                                   27
                                   26
                                   29

20    24    23    30

FIG.3

13    19    32    22    31

26

28

20    23